# EUROPEAN PATENT SPECIFICATION

(11) **EP 0 838 549 B1**
(45) Date of publication and mention of the grant of the patent: **13.03.2002**
(21) Application number: 97115502.3
(22) Date of filing: 08.09.1997
(51) Int. Cl.: D21F 3/08

(54) **Press roll**
Presswalze
Rouleau de presse

(30) Priority: 18.10.1996 SE 9603833
(43) Date of publication of application: 29.04.1998
(60) Divisional application: 00113895.7
(73) Proprietor: Metso Paper Karlstad Aktiebolag, 651 15 Karlstad (SE)
(72) Inventor: Bengtsson, Roland, 656 35 Karlstad (SE); Gustavsson, Lars, 652 26 Karlstad (SE); Salomonsson, Carl-Gustaf, 665 94 Fageras (SE); Säfman, Nils-Erik, 654 61 Karlstad (SE); Törnqvist, Kenth, 632 29 Eskilstuna (SE)
(74) Representative: Lundquist, Lars-Olof

(56) References cited:
- FI-B- 90 120
- US-A- 5 098 523

## Description

The present invention relates to a press roll intended to cooperate with a counter roll to form a press with long nip for paper or board machines, said press roll comprising two end walls, a tubular, flexible, liquid-impervious jacket, secured at its edge portions by an elastic clamping ring to peripheral parts of the end walls, and stationary support means for supporting the end walls, said end walls including bearing means arranged to permit rotation of the jacket and a section of each end wall disposed radially outside the bearing means, in relation to the stationary support means, the press roll also including a press shoe forming together with the counter roll a pressure zone with long nip through which the jacket is moved in sliding contact with the press shoe, a form-stable clamping ring being screwed to the inner side of the end-wall part by means of a plurality of clamping bolts to clamp the radially outwardly expandable elastic clamping ring between itself and this so that the edge portion of the jacket is clamped firmly against a counter-support member disposed radially outside the elastic ring.

US-5,098,523 describes a press roll, the jacket of which is secured to the end walls by means of circle-arc, wedge-shaped locking elements that are pulled into circular, axial grooves on the inner sides of the end walls, thereby clamping the edge portions of the jacket. This known arrangement effectively locks the jacket to the end walls. However, it has been found that repeated assembly and dismantling of the jacket causes the edge portions to stretch since the wedge-shaped locking element must be moved axially under increasing clamping action against the jacket. Furthermore, the locking element acts on the outside of the jacket so that the jacket is compressed radially inwardly and no compensation therefore occurs for any over-dimensioning of the jacket. This results in outward bending of the jacket. In view of these drawbacks it is difficult to achieve an accurate fit of the jacket while this work is in progress and assembly of the jacket may have to be discontinued and re-commenced from the beginning.

The problems described above are eliminated with a press roll according to FI-90120 in which the jacket is clamped against a counter-support ring by means of an elastic clamping ring, the elastic clamping ring being compressed between an outer or inner clamping ring of metal and the peripheral portion of the end wall. One drawback with the arrangement according to FI-90120 is that it is difficult to achieve accurate fitting of the various elements in relation to each other quickly and simply, and at the same time ensure sufficient clamping force around the whole jacket.

The object of the present invention is to provide a press roll that at least essentially reduces the problems of the latter known press roll.

The press roll according to the invention is characterized in that each end wall comprises guide means to provide a guided engagement relationship between the form-stable clamping ring and the end-wall part, said guide means comprising at least one axially concentric guide groove in the form-stable clamping ring and at least one axial, concentric guide flange in the end-wall part, for sliding cooperation with the axially opposite guide groove, said guide groove defining radially externally a radial clamping surface disposed opposite a corresponding clamping surface of the end-wall part for cooperating clamping of the elastic clamping ring.

The invention will be described in more detail in the following with reference to the drawings.

Figure 1 shows schematically parts of a wet press having a press roll with end walls in accordance with the invention.

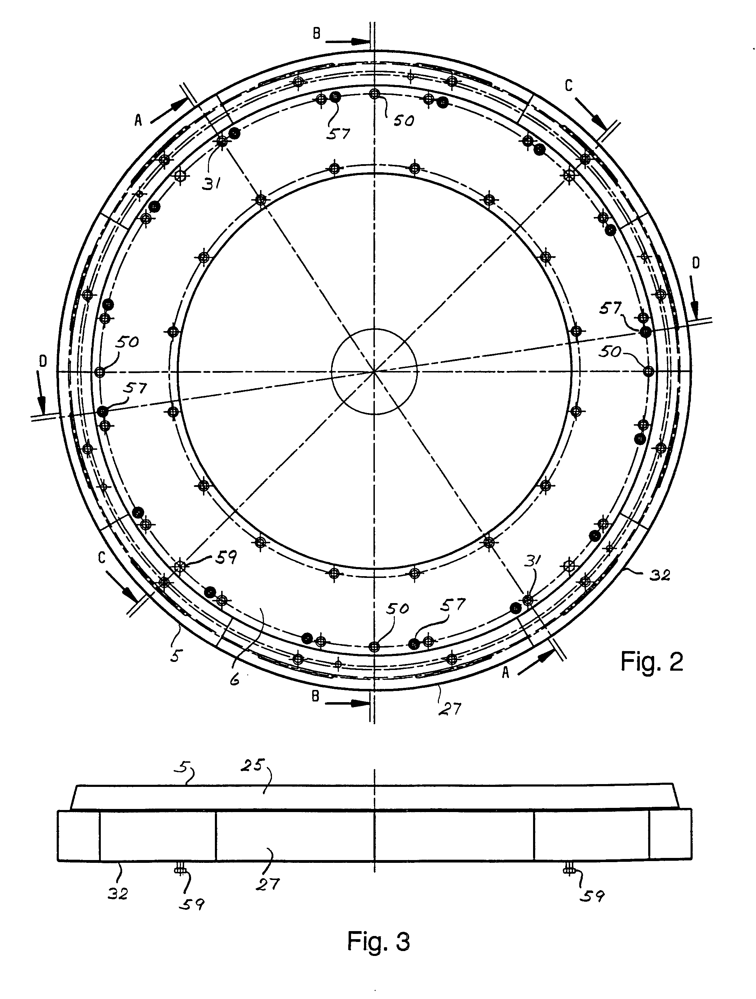

Figure 2 is an elevation view from above of the end walls as shown in Figure 1.

Figure 3 is a side view of the end wall as shown in Figure 2.

Figures 4-7 are different sectional views along the lines A-A, B-B, C-C and D-D, respectively, in Figure 2.

Figure 8 shows a portion of the end wall shown in Figure 5 before a form-stable clamping ring has been brought into abutment against a peripheral part of the end wall.

Figure 9 shows a portion of the end wall shown in Figure 4 after the clamping bolts in the end wall have been screwed in, causing expansion of the elastic clamping ring and securing the jacket.

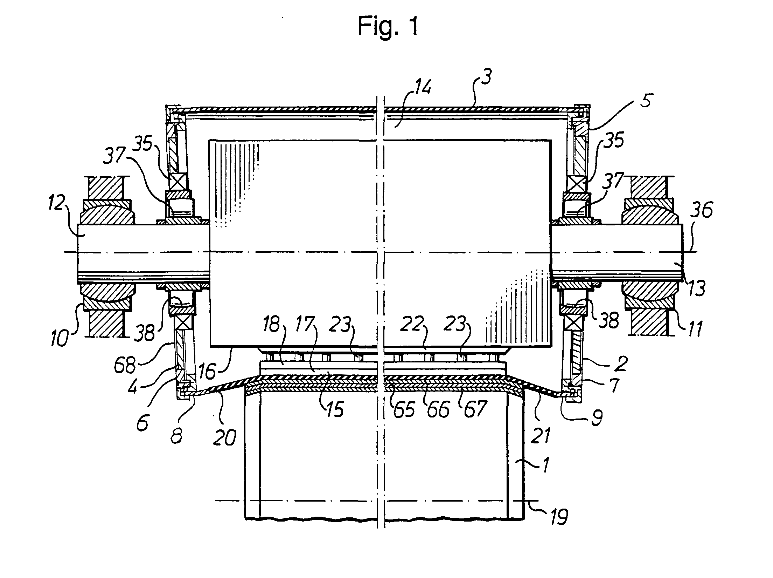

With reference to Figure 1 this shows schematically parts of a wet press disposed in the wet section of a paper machine or board machine in order to press water out of and consolidate a formed wet fibrous web 65.

The wet press comprises a rotatable counter roll 1 and a press roll 2 having a tubular, liquid-impervious jacket 3 of flexible material such as plastic or rubber, and two opposing circular end walls 4, 5, at the peripheral parts 6, 7 of which the edge portions 8 and 9, respectively, of the jacket are air-tightly and liquid-tightly joined by means of an endless, elastic, clamping ring 24 consisting of suitable rubber material or rubber-like material. The elastic clamping ring 24 suitably has rectangular, preferably quadratic cross section.

The press roll is mounted in two stand parts 10, 11 by means of support means in the form of two stationary support pins 12, 13 with circular cross section, extending in air-tight and liquid-tight manner through central openings in the end walls 4, 5. The end walls 4, 5, jacket 3 and support pins 12, 13 thus enclose an air and liquid-tight chamber 14 which can be placed under sufficient pressure, e.g. 0.5 bar overpressure, so that the end walls 4, 5 are moved apart from each other to keep the jacket 3 sufficiently taught. The end walls 4, 5 are consequently axially displaceable in relation to the support pins 12, 13. Alternatively a spring means can be arranged in the press roll, which presses against the end walls or against one of them to stretch the jacket in axial direction. Pneumatic or hydraulic cylinders may also be used for this purpose, or any suitable combination of said arrangements.

The press roll 2 also includes a press shoe 15 disposed opposite the counter roll 1, the press shoe and counter roll together forming a pressure zone with long nip within a predetermined sector of the counter roll 1 where the jacket 3 is thus pressed down against the press shoe 15 and runs around the counter roll 1. The press shoe 15 is supported by an inner stand 16 rigidly mounted to the inner parts of the support pins 12, 13.

The fibrous web to be dewatered is enclosed between two felts 66, 67, each disposed to run in a loop over a plurality of drums (not shown) and through said pressure zone. During operation the continuous wet fibrous web 65 runs through the pressure zone together with the felts 66, 67 which absorb liquid pressed out of the fibrous web.

The press shoe 15 shown consists of a sliding part 17 and a frame part 18, the sliding part 17 having a sliding surface along which the jacket 3 moves in sliding contact. The press shoe 15 located opposite the counter roll 1 extends across the jacket 3 parallel to the axis of rotation 19 of the counter roll 1 and has a length equivalent to or slightly less than the length of the counter roll 1, which in turn is shorter than the press roll 2 so that between the end walls 4, 5 and counter roll 1, within the area of the pressure zone, inclined sections 20, 21 of the jacket 3 are formed outside the counter roll. In the preferred embodiment shown the press shoe 15 is connected to the stand 16 via a jack unit 22 having several jacks 23 by means of which the pressure of the press shoe 15 onto the jacket 3 and fibrous web can be regulated. A channel system (not shown) is also arranged in the press shoe 15 for the supply of lubricant to the sliding surface of the sliding part 17 to form and maintain a friction-reducing film between the jacket 3 and press shoe 15. The press shoe 15 may be provided with hydrostatic pressure pockets (not shown) filled with pressure fluid acting against the inside of the jacket 3 to compress the fibrous web in a controlled manner.

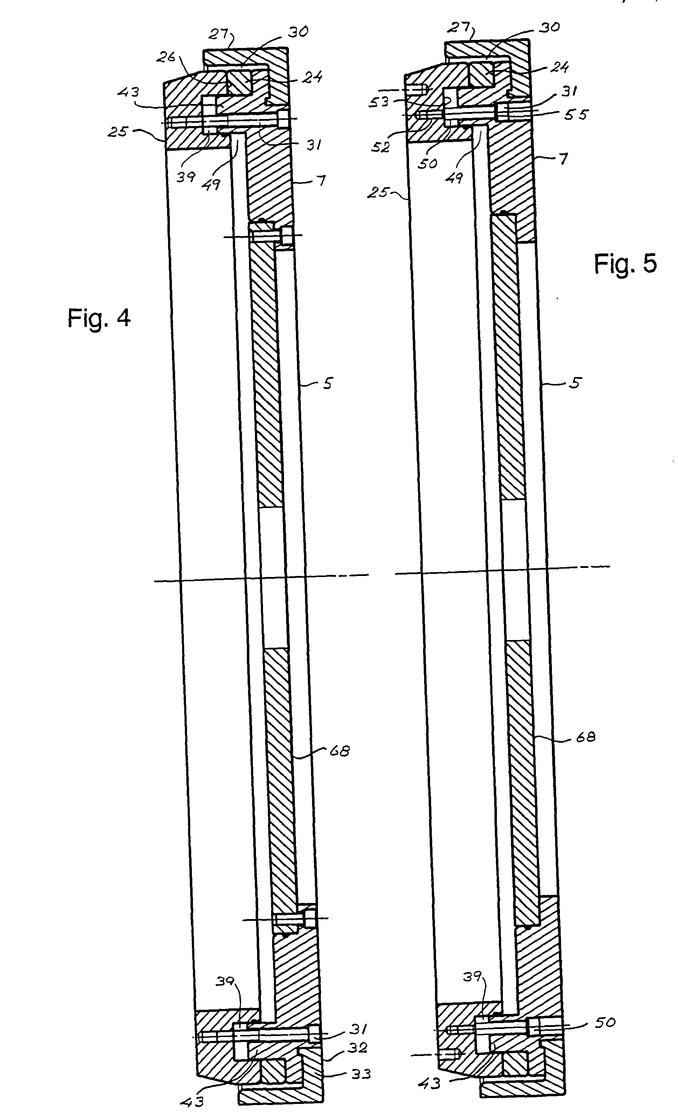

The end walls 4, 5 have circular bearing means 35 for rotation of the jacket and the section 68 of each end wall located radially outside the bearing means 35 about an axis of rotation 36, in which section 68 the peripheral end-wall part 6, 7, respectively, is thus included together with a central part to which the peripheral end-wall part is screwed by means of bolts (see Figure 4). The end wall section 68 is form-stable and consists of a suitable metal material. In the embodiment according to Figure 1 the bearing means 35 consist of rolling bearings such as ball bearings or roller bearings. Alternatively, slide bearings with flat or spherical sliding surfaces may be used. Each end wall 4, 5 also comprises cylindrical slide bearings 37 disposed so that the end wall can be displaced axially in relation to the support pins 12, 13. Alternatively, only one end wall is provided with such a slide bearing 37 in order to effect axial displacement of the end wall. The end walls 4, 5 also comprise means 38 concentric with the axis of rotation 36 and disposed so that the peripheral end-wall parts 6, 7 can be moved freely axially towards each other and towards the press shoe 15 or nip region due to the influence of the axial stresses that occur in the jacket 3 upon its passage through the pressure zone. The peripheral parts 6, 7 of the end walls can be drawn inwardly and inclined in the nip region with a small angle of about 0.5°. Said local axial stresses can thus be greatly reduced. The stress-reducing means 38 may consist of spherical bearings as shown, or of built-in elastic rings or sections of the end walls. The invention may, however, be applied on press rolls that are not provided with such stress-reducing means 38.

Since the jacket is secured by its parallel edge portions to the end walls, more specifically to their peripheral end-wall parts 6, 7, and the concentric means 38 are arranged to permit free axial displacement of the peripheral end-wall parts 6, 7 inwardly within the pressure zone due to the influence of said axial stresses in the jacket 3, the end walls 4, 5 will consequently be inclined in a self-adjusting manner throughout operation.

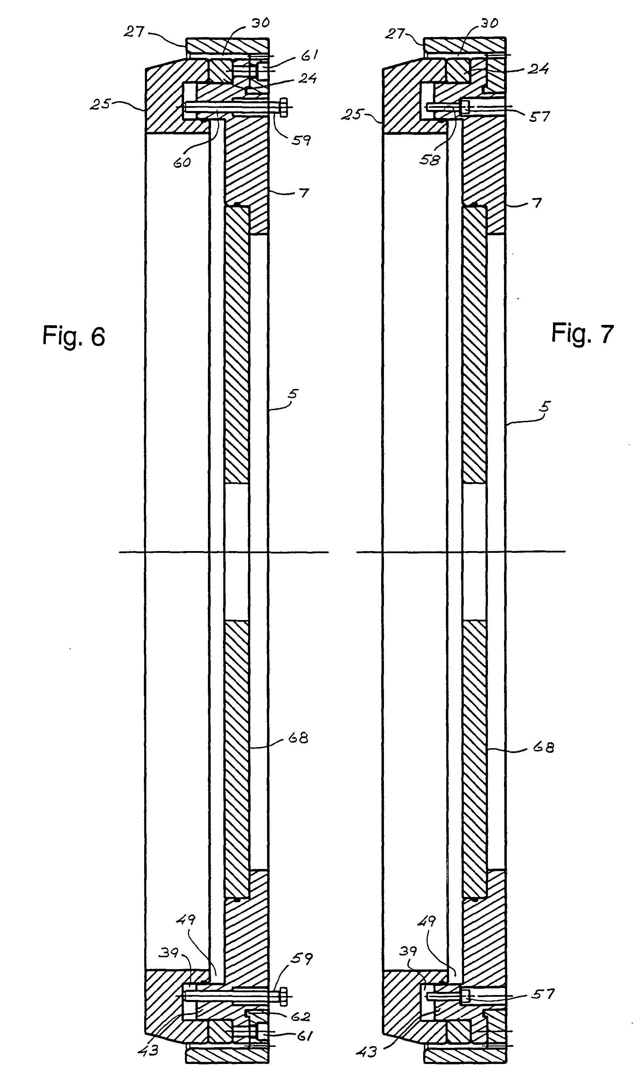

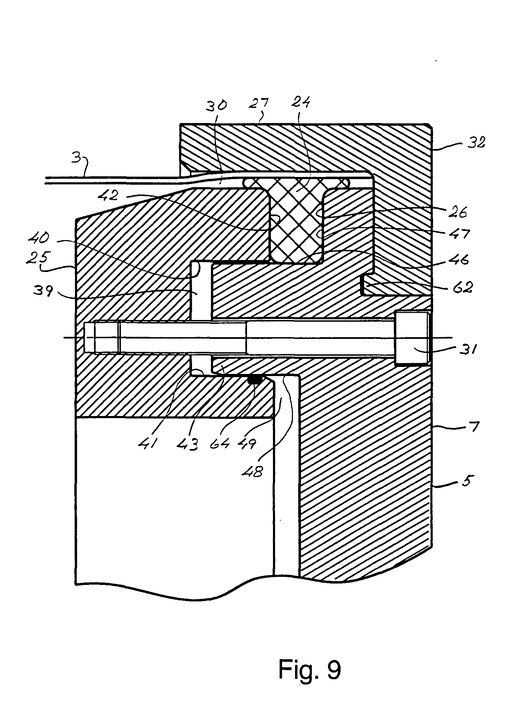

An endless, form-stable clamping ring 25 is arranged on the inside of each end wall 4, 5 to form a radially outwardly open groove 26 between itself and the peripheral end-wall part 6, 7, to receive said elastic clamping ring 24. A counter-support member 27 is arranged radially outside the elastic clamping ring 24 to form an axially inwardly open concentric gap 30 between itself and opposite cylindrical surfaces of the form-stable clamping ring 25 and the peripheral end-wall part 6, 7, to receive the edge portion 8, 9 of the jacket 3, initially with slight clearance. With the aid of a plurality of axial clamping bolts 31 distributed uniformly around the circumference, the form-stable clamping ring 25 is drawn towards the peripheral end-wall part 6, 7 to compress the elastic clamping ring 24 so that it expands radially outwards and firmly clamps the edge portion 8, 9 of the jacket 3 between itself and said counter-support member 27, as shown more clearly in Figure 9. In the embodiment shown, the counter-support member 27 is formed by one shank of a segmented L-shaped ring 32, the other shank 33 of the ring 32 being screwed to the peripheral end-wall part 6, 7 by means of bolts 61 (see Figure 6). The shank 33 has an axial boss 62 which rests in a corresponding axial groove in the peripheral end-wall part 6, 7 to absorb the momentary stress arising when the jacket 3 is pressed against the outer shank 27.

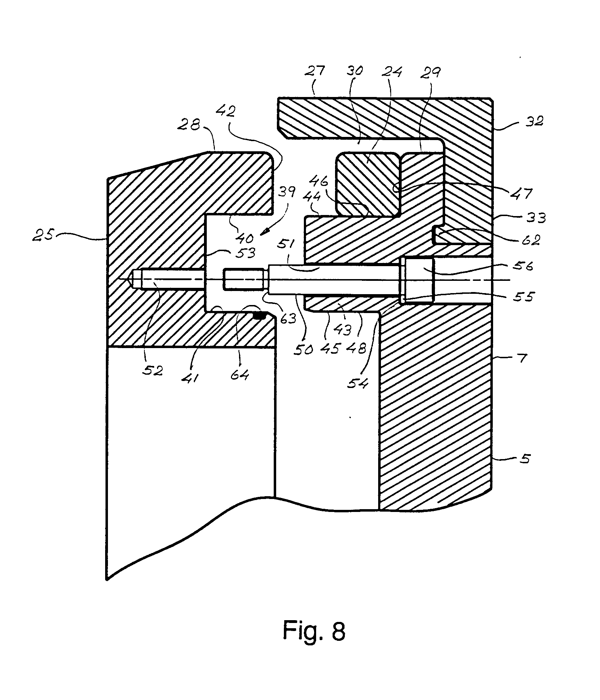

Each end wall 4, 5 comprises guide means to ensure exact assembly of the form-stable clamping ring 25 on the peripheral end-wall part 6, 7 so that these elements are not inclined in relation to each other, but retain their parallel, concentric positions throughout the assembly work. In the embodiment shown the guide means comprises an axially concentric guide groove 39 (see Figures 4-9), designed in the form-stable clamping ring 25 on the side facing the end-wall part 6, 7 and having opposing cylindrical guide surfaces 40, 41 and a predetermined depth. The guide groove 39 defines radially externally an axially inner clamping surface 42 for cooperation with the elastic clamping ring 24. The guide means also comprise an axial, concentric guide flange 43 designed in the peripheral end-wall part 6, 7 on the side facing the form-stable clamping ring 25 opposite said guide groove 39 and having cylindrical guide surfaces 44, 45 facing away from each other for cooperation with the guide surfaces 40, 41 of the guide groove 39. The radially outer guide surface 44 of the guide flange 43 continues into a counter-support surface 46 for the elastic clamping ring 24. An axially outer clamping surface 47 extends at right angles to the counter-support surface 46 for cooperation with the elastic clamping ring 24, said clamping surface 47 thus being located opposite the clamping surface 42 of the form-stable clamping ring 25. The radially inner guide surface 45 of the guide flange 43 continues into the distance surface 48 so that a gap 49 always exists between the peripheral end-wall part 6, 7 and the form-stable clamping ring 25. The guide means also comprise a plurality of guide bolts 50 distributed uniformly around the circumference, each extending through an axial, unthreaded hole 51 in the peripheral end-wall part 6, 7 within the region of the guide flange 43, to an axially threaded hole 52 in the bottom 53 of the guide groove 39 in the form-stable clamping ring 25 into which the guide bolt 50 is screwed until a stop against further turning is obtained. In the embodiment shown the turning stop is formed by a shoulder 63 on the guide bolt 50 behind its threaded portion for cooperating with the bottom surface 53 of the guide groove 39. The guide bolt 50 has no influence on the elastic clamping ring 24. The length of the guide bolt 50 and the location of the edge 54 of the entrance to the hole are therefore so adjusted to each other that a small gap 55 is formed between the head 56 of the guide bolt 50 and the edge 54 of the hole when the clamping surface 42 of the form-stable clamping ring 25 is in contact with the elastic clamping ring 24 without clamping action. Under the stated conditions, this gap 55 is about 1-5 mm. The distance between the head 56 of the guide bolt 50 and the edge 54 of the hole increases then when the elastic clamping ring 24 is compressed by the clamping bolts 31. However, the defined gap 55 is smaller than the part of the guide flange 43 disposed in the guide groove 39 in the stated condition, i.e. when the clamping surface 42 is in clamp-free contact with the elastic clamping ring 24. The edge 54 of the hole is recessed so that the head 56 of the guide bolt 50 is always located in the recess, which is suitably closed to prevent the guide bolt 50 that has been screwed to the turning-stop, from being unintentionally loosened and released from the form-stable clamping ring 25. Together with said edges 54 of the holes, the guide bolts 50 act as mechanical stops to retain the form-stable clamping ring 25 in its guided engagement with the peripheral end-wall part 6, 7 via the guide groove 39 and guide flange 43 when the clamping bolts 31 have been loosened to dismantle the jacket 3. This is valuable from the safety aspect, as well as the form-stable clamping ring 25 being retained in a starting position to permit direct assembly of a new jacket or re-tensioning of the existing jacket. When the clamping bolts 31 are screwed in, the form-stable clamping ring 25 is guided by the guide means to an exact position in relation to the peripheral end-wall parts 6, 7.

The elastic clamping ring 24 also forms an effective seal. An additional seal in the form of an 0-ring 64 is arranged at the inner guide surface 41 of the guide groove 39.

Each end wall 4, 5 comprises a plurality of distance elements or spacers placed between the form-stable clamping ring 25 and the end-wall part 6, 7 in order to determine or define a least axial distance between the form-stable clamping ring 25 and the end-wall part. Such distance elements are rigid or incompressible. In the embodiment shown, the distance elements comprise a plurality of stop bolts 57 distributed uniformly around the circumference and screwed into axial, threaded holes 58 in the peripheral end-wall part 6, 7, their free ends to be brought into contact with the bottom surface 53 of the guide groove 39 when the elastic clamping ring 24 has been compressed sufficiently to secure the jacket 3 to the end wall 4, 5. The stop bolts 57 in a given installation have the same length of the part that protrudes out of the guide flange 43, this length being predetermined in order to guarantee that the jacket 3 is sufficiently secured at all points around its circumference. Variable pressure forces from the elastic clamping ring 24 against the jacket 3 can be obtained with the aid of the stop bolts 57 or other distance elements, via the clamping bolts 31 and the form-stable clamping ring 25, as well as compensation for different thickness of the jacket 3. The stroke length of the stop bolt 57 can be varied with the aid of spacing washers having different thicknesses for application on the stop bolt 57.

A plurality of dismantling bolts 59 distributed uniformly around the circumference are screwed into axial, threaded holes 60 in the peripheral end-wall part 6, 7 to an inoperative starting position. When dismantling the jacket 3 the dismantling bolts 59 are screwed further in so that their free ends cooperate with the bottom surface 53 of the guide groove 39 in order to loosen the form-stable clamping ring 25 and displace it away from the peripheral end-wall part 6, 7, particularly when these elements have become locked or wedged together.

Alternatively the guide means may comprise several, e.g. two, guide grooves and a corresponding number of guide flanges.

## Claims

1. A press roll (2) intended to cooperate with a counter roll (1) to form a press with long nip for paper or board machines, said press roll comprising two end walls (4, 5), a tubular, flexible, liquid-impervious jacket (3), secured at its edge portions (8, 9) by an elastic clamping ring (24) to peripheral parts (6, 7) of the end walls (4, 5), and stationary support means (12, 13) for supporting the end walls, said end walls (4, 5) including bearing means (35) arranged to permit rotation of the jacket (3) and a section (68) of each end wall (4, 5) disposed radially outside the bearing means (35), in relation to the stationary support means (12, 13), the press roll (2) also including a press shoe (15) forming together with the counter roll (1) a pressure zone with long nip through which the jacket (3) is moved in sliding contact with the press shoe (15), a form-stable clamping ring (25) being screwed to the inner side of the end-wall part (6, 7) by means of a plurality of clamping bolts (31) to clamp the radially outwardly expandable elastic clamping ring (24) between itself and this so that the edge portion (8, 9) of the jacket (3) is clamped firmly against a counter-support member (27) disposed radially outside the elastic ring (24), **characterized in that** each end wall (4, 5) comprises guide means to provide a guided engagement relationship between the form-stable clamping ring (25) and the end-wall part (6, 7), said guide means comprising at least one axially concentric guide groove (39) in the form-stable clamping ring (25) and at least one axial, concentric guide flange (43) in the end-wall part (6, 7) for sliding cooperation with the axially opposite guide groove (39), said guide groove (39) defining radially externally a radial clamping surface (42) disposed opposite a corresponding clamping surface (47) of the end-wall part (6, 7) for cooperating clamping of the elastic clamping ring (24).

2. A press roll as claimed in claim 1, **characterized in that** the guide means comprise a plurality of guide bolts (50) distributed uniformly around the circumference, each extending through an axial, unthreaded hole (51) in the guide flange (43) and being screwed to a stop position against turning in the bottom (53) of the guide groove (39), the length of the guide bolt (50) and the location of an outer edge (54) of said hole (51) being so adjusted to each other that a gap (55) exists between the head of the guide bolt (50) and the edge (54) of the hole when the clamping surface (42) of the form-stable clamping ring (25) is in contact with the elastic clamping ring (24) without clamping action.

3. A press roll as claimed in claim 2, **characterized in that** said gap is 1-5 mm.

4. A press roll as claimed in either of claims 2 or 3, **characterized in that** the guide bolts (50), together with said edges (54) of the holes, act as mechanical stops to retain the form-stable clamping ring (25) in its guided engagement with the peripheral end-wall part (6, 7) via the guide groove (39) and guide flange (43) when said clamping bolts (31) are loosened to dismantle the jacket (3).

5. A press roll as claimed in any of claims 2-4, **characterized in that** said gap (55) is less than the portion of the guide flange (43) which is in engagement with the guide groove (39) when said clamping surface (42) is in contact with the elastic clamping ring (24) without clamping action.

6. A press roll as claimed in any of claims 1-5, **characterized in that** a plurality of stop bolts (57) distributed uniformly around the circumference are screwed into axial, threaded holes (58) in the peripheral end-wall part (6, 7) their free ends to be brought into contact with the bottom surface (53) of the guide groove (39) when the jacket (3) is secured to the end wall around its entire circumference.

7. A press roll as claimed in claim 6, **characterized in that** the stroke length of the stop bolts (57) is variable with the aid of spacing washers having different thicknesses for application on the stop bolts (57) depending on the individual type of operation.

## Patentansprüche

1. Presswalze (2), die mit einer Gegenwalze (1) zusammenwirken soll, um eine Presse mit einem Langspalt für Papiermaschinen oder Pappmaschinen zu bilden, wobei die Presswalze zwei Endwände (4, 5), einen röhrenartigen flexiblen, gegenüber Flüssigkeiten undurchlässigen Mantel (3), der an seinen Randabschnitten (8, 9) durch einen elastischen Klemmring (24) an Umfangsabschnitten (6, 7) der Endwände (4, 5) gesichert ist, und eine ortsfeste Stützeinrichtung (12, 13) zum Stützen der Endwände aufweist, wobei die Endwände (4, 5) Lagereinrichtungen (35) aufweisen, die so eingerichtet sind, dass sie eine Drehung des Mantels (3) und eines Abschnittes (68) von jeder Endwand (4, 5), der radial außerhalb der Lagereinrichtung (35) angeordnet ist, in Bezug auf die ortsfeste Stützeinrichtung (12, 13) ermöglichen, wobei die Presswalze (2) außerdem einen Pressschuh (15) hat, der zusammen mit der Gegenwalze (1) eine Presszone mit einem Langspalt ausbildet, durch den der Mantel (3) in einem Gleitkontakt mit dem Pressschuh (15) bewegt wird, wobei ein formstabiler Klemmring (25) an der Innenseite des Endwandabschnittes (6, 7) mittels einer Vielzahl an Klemmbolzen (31) eingeschraubt ist, um den axial nach außen ausdehnbaren elastischen Klemmring (24) zwischen ihm selbst und dieser so zu klemmen, dass der Randabschnitt (8, 9) des Mantels (3) fest an einem Gegenstützelement (27) geklemmt ist, das radial außerhalb des elastischen Ringes (24) angeordnet ist,
**dadurch gekennzeichnet, dass**
jede Endwand (4, 5) eine Führungseinrichtung aufweist, um eine geführte Eingriffsbeziehung zwischen dem formstabilen Klemmring (25) und dem Endwandabschnitt (6, 7) vorzusehen, wobei die Führungseinrichtung zumindest eine axial konzentrische Führungsnut (39) in dem formstabilen Klemmring (25) und zumindest einen axialen konzentrischen Führungsflansch (43) in dem Endwandabschnitt (6, 7) für eine Gleitzusammenwirkung mit der axial gegenüberstehenden Führungsnut (39) aufweist, wobei die Führungsnut (39) radial nach außen eine radiale Klemmfläche (42) definiert, die gegenüberstehend einer entsprechenden Klemmfläche (47) des Endwandabschnittes (6, 7) für ein zusammenwirkendes Klemmen des elastischen Klemmringes (24) angeordnet ist.

2. Presswalze gemäß Anspruch 1,
**dadurch gekennzeichnet, dass**
die Führungseinrichtung eine Vielzahl an Führungsbolzen (50) aufweist, die gleichmäßig über den Umfang verteilt sind, wobei sich jeder durch ein axiales nicht mit einem Gewinde versehenes Loch (51) in dem Führungsflansch (43) erstreckt und bis zu einer Anschlagposition entgegen einem Drehen in dem Boden (53) der Führungsnut (39) verschraubt ist, wobei die Länge des Führungsbolzens (50) und der Ort eines Außenrandes (54) des Loches (51) so zueinander eingestellt sind, dass ein Zwischenraum (55) zwischen dem Kopf des Führungsbolzens (50) und dem Rand (54) des Loches vorhanden ist, wenn die Klemmfläche (42) des formstabilen Klemmringes (25) mit dem elastischen Klemmring (24) ohne Klemmwirkung in Kontakt steht.

3. Presswalze gemäß Anspruch 2,
**dadurch gekennzeichnet, dass**
der Zwischenraum 1 bis 5 mm beträgt.

4. Presswalze gemäß einem der Ansprüche 2 oder 3,
**dadurch gekennzeichnet, dass**
die Führungsbolzen (50) zusammen mit den Rändern (54) der Löcher als mechanische Anschläge wirken, um den formstabilen Klemmring (25) bei seinem geführten Eingriff mit dem Umfangsendwandabschnitt (6, 7) über die Führungsnut (39) und den Führungsflansch (43) zu halten, wenn die Klemmbolzen (31) für ein Demontieren des Mantels (3) gelöst werden.

5. Presswalze gemäß einem der Ansprüche 2 bis 4,
**dadurch gekennzeichnet, dass**
der Zwischenraum (55) kleiner als der Abschnitt des Führungsflansches (43) ist, der mit der Führungsnut (39) in Eingriff steht, wenn die Klemmfläche (42) mit dem elastischen Klemmring (24) ohne Klemmwirkung in Kontakt steht.

6. Presswalze gemäß einem der Ansprüche 1 bis 5,
**dadurch gekennzeichnet, dass**
eine Vielzahl an Anschlagbolzen (57), die gleichmäßig über den Umfang verteilt sind, in axiale mit einem Gewinde versehene Löcher (58) in dem Umfangsendwandabschnitt (6, 7) geschraubt sind, wobei ihre freien Enden in einen Kontakt mit der Bodenfläche (53) der Führungsnut (39) gebracht sind, wenn der Mantel (3) an der Endwand um seinen gesamten Umfang gesichert ist.

7. Presswalze gemäß Anspruch 6,
**dadurch gekennzeichnet, dass**
die Hublänge der Anschlagbolzen (57) mit der Hilfe von Abstandsringen mit unterschiedlichen Dicken für ein Anwenden bei den Anschlagbolzen (57) in Abhängigkeit von der einzelnen Betriebsart veränderlich ist.

## Revendications

1. Rouleau presseur (2) destiné à coopérer avec un contre-rouleau (1) afin de former une presse avec une pince longue pour des machines à papier ou à carton, ledit rouleau presseur comprenant deux parois d'extrémité (4, 5), une enveloppe (3) tubulaire souple, imperméable au liquide, fixée à ses parties de bord (8, 9) par une bague élastique de blocage (24) sur des parties périphériques (6, 7) des parois d'extrémité (4, 5), et des moyens de support fixes (12, 13) afin de supporter les parois d'extrémité, lesdites parois d'extrémités (4, 5) comprenant des moyens formant palier (35) agencés pour assurer la rotation de l'enveloppe (3) et une section (68) de chaque paroi d'extrémité (4, 5) est disposée radialement à l'extérieur du moyen formant palier (35), par rapport aux moyens de support fixes (12, 13), le rouleau presseur (2) comprenant aussi un patin presseur (15) formant ensemble avec le contre-rouleau (1) une zone de compression avec une pince longue à travers laquelle l'enveloppe (3) est déplacée en contact de glissement avec le patin presseur (15), une bague de blocage de forme rigide (25) étant vissée sur la face interne de la partie de paroi d'extrémité (6, 7) au moyen d'une pluralité de vis de blocage (31) afin de bloquer la bague élastique de blocage (24) pouvant être expansée radialement vers l'extérieur entre elle-même et cette dernière de telle sorte que la partie de bord (8, 9) de l'enveloppe (3) est appliquée fermement sur un élément formant contre-support (27) disposé radialement à l'extérieur de la bague élastique (24), **caractérisé en ce que** chaque paroi d'extrémité (4, 5) comprend un moyen de guidage destiné à assurer une relation d'assemblage guidé entre la bague de blocage de forme rigide (25) et la partie de paroi d'extrémité (6, 7), ledit moyen de guidage comprenant au moins une rainure de guidage (39) axialement concentrique dans la bague de blocage de forme rigide (25) et au moins une collerette de guidage (43) axiale concentrique dans la partie de paroi d'extrémité (6, 7) afin de coopérer par glissement avec la rainure de guidage axialement opposée (39), ladite rainure de guidage (39) définissant radialement à l'extérieur une surface de blocage radial (42) disposée à l'opposé d'une surface de blocage (47) correspondante de la partie de paroi d'extrémité (6, 7) afin de coopérer au blocage de la bague élastique de blocage (24).

2. Rouleau presseur selon la revendication 1, **caractérisé en ce que** le moyen de guidage comprend une pluralité de vis de guidage (50) réparties de manière uniforme autour de la circonférence, chacune s'étendant à travers un orifice axial non fileté (51) dans la collerette de guidage (43) et étant vissée jusqu'à une position d'arrêt en rotation dans la partie inférieure (53) de la rainure de guidage (39), la longueur de la vis de guidage (50) et la position d'un bord externe (54) dudit orifice (51) étant ajustées l'une par rapport à l'autre de telle sorte qu'un jeu (55) existe entre la tête de la vis de guidage (50) et le bord (54) de l'orifice lorsque la surface de blocage (42) de la bague de blocage de forme rigide (25) est en contact avec la bague élastique de blocage (24) sans action de blocage.

3. Rouleau presseur selon la revendication 2, **caractérisé en ce que** ledit jeu est de 1 à 5 mm.

4. Rouleau presseur selon l'une ou l'autre des revendications 2 ou 3, **caractérisé en ce que** les vis de guidage (50), ensemble avec lesdits bords (54) des orifices, servent de butées mécaniques afin de retenir l'assemblage guidé de la bague de blocage de forme rigide (25) avec la partie de paroi d'extrémité périphérique (6, 7) par l'intermédiaire de la rainure de guidage (39) et de la collerette de guidage (43) lorsque lesdites vis de blocage (31) sont desserrées de manière à déposer l'enveloppe (3).

5. Rouleau presseur selon l'une quelconque des revendications 2 à 4, **caractérisé en ce que** ledit jeu (55) est inférieur à la dimension de la partie de la collerette de guidage (43) qui est assemblée avec la rainure de guidage (39) lorsque ladite surface de blocage (42) est en contact avec la bague élastique de blocage (24) sans action de blocage.

6. Rouleau presseur selon l'une quelconque des revendications 1 à 5, **caractérisé en ce qu'**une pluralité de vis d'arrêt (57) réparties de manière uniforme autour de la circonférence est vissée dans des orifices axiaux filetés (58) sur la partie de paroi d'extrémité périphérique (6, 7), leur extrémité libre étant mise en contact avec la surface inférieure (53) de la rainure de guidage (39) lorsque l'enveloppe (3) est fixée sur la paroi d'extrémité sur la totalité de sa circonférence.

7. Rouleau presseur selon la revendication 6, **caractérisé en ce que** la longueur utile des vis d'arrêt (57) peut être modifiée à l'aide de rondelles d'espacement présentant différentes épaisseurs à appliquer sur les vis d'arrêt (57) en fonction du type d'opération individuel.
